# EUROPEAN PATENT APPLICATION

(11) **EP 3 531 743 A1**
(43) Date of publication of application: **28.08.2019**
(21) Application number: 18158944.1
(22) Date of filing: 27.02.2018
(51) Int. Cl.: H04W 28/08, H04W 28/16, H04L 1/18, H04L 5/00, H04W 72/12, H04L 12/801, H04W 28/02, H04L 12/833

(54) **NETWORK RESOURCE RESERVATION FOR FRONTHAUL NETWORKS**

(71) Applicant: Nokia Solutions and Networks GmbH & Co. KG, 81541 Munich (DE)
(72) Inventor: Reinartz, Ole, 89075 Ulm (DE); Deiss, Thomas, 44625 Herne (DE); Dickhaus, Bertold, 57462 Olpe (DE); Knueppel, Dieter, 41068 Mönchengladbach (DE)

(57) **Abstract**

An apparatus is provided which is configured to control at least one fronthaul traffic stream via a fronthaul network to at least one radio unit, prepare a network resource reservation request for the at least one fronthaul traffic stream based on an expected traffic amount, send the network resource reservation request to a network control entity, receive a network resource reservation grant from the network control entity based on the network resource reservation request, and adapt scheduling decisions for the at least one fronthaul traffic stream based on the received grant.

## Description

### Field of the Invention

The present invention relates to an apparatus, a method and a computer program product by which Network resource reservation for fronthaul networks can be achieved.

### Related background Art

The project leading to this application has received funding from the European Union's Horizon 2020 research and innovation program under grant agreement No 671598.

The following meanings for the abbreviations used in this specification apply:
- AQM: Active Queue Management
- BBU: Baseband Unit
- CC: Congestion Control
- CPRI: Common Public Radio Interface
- DU: Distributed Unit
- FH: Fronthaul
- FPGA: Field Programmable Gate Array
- IP: Internet Protocol
- MAC: Media Access Control
- NGFI: Next Generation Radio Interface
- PDCP: Packet Data Convergence Protocol
- PDU: Protocol Data Unit
- QoS: Quality of Service
- RSVP-TE: Resource Reservation Protocol - Traffic Engineering
- RTT: Round Trip Time
- RU: Radio Unit
- TCP: Transmission Control Protocol
- TDM: Time Division Multiplex
- TTI: Transmission Time Interval
- UE: User Equipment

Embodiments of the present invention, although not limited to this, relate control of fronthaul traffic between a network element such as a BBU and at least one RU.

Antenna data needs to be exchanged between a radio unit (RU) and the baseband unit (BBU), called as well e.g. "Distributed unit (DU)" or "System Module". Presently, CPRI is used for the exchange of the antenna data. CPRI is a TDM based scheme, where all sampled antenna data are send as a constant bit rate stream of data. IEEE (1914.3) and the CPRI consortium have specified schemes to carry the antenna data instead within a sequence of Ethernet frames. FH is defined as the network exchanging low-latency data between RU and BBU with a functional split of the protocol stack below or within MAC. The BBU is defined as a unit processing those parts of the baseband functions not contained in the RU. It may include functions of the whole radio stack or parts of it up to the PDCP.

E.g. depending on the functional split between RU and BBU, this data stream becomes a variable bitrate stream, where the amount of data between RU and BBU is proportional to the amount of end user data. This allows significant statistical multiplexing gains on links aggregating the traffic of several RUs. Using statistical multiplexing gains, i.e. oversubscribing a link, may cause congestion and correspondingly delayed or dropped packets.

### Summary of the Invention

Embodiments of the present invention address this situation and aim to provide measures to reduce congestion in fronthaul traffic.

According to a first aspect of the present invention an apparatus is provided which comprises means for performing: controlling at least one fronthaul traffic stream via a fronthaul network to at least one radio unit, preparing a network resource reservation request for the at least one fronthaul traffic stream based on an expected traffic amount, sending the network resource reservation request to a network control entity, receiving a network resource reservation grant from the network control entity based on the network resource reservation request, and adapting scheduling decisions for the at least one fronthaul traffic stream based on the received grant.

According to a second aspect of the present invention a method is provided which comprises:
controlling at least one fronthaul traffic stream via a fronthaul network to at least one radio unit,
preparing a network resource reservation request for the at least one fronthaul traffic stream based on an expected traffic amount,
sending the network resource reservation request to a network control entity,
receiving a network resource reservation grant from the network control entity based on the network resource reservation request, and
adapting scheduling decisions for the at least one fronthaul traffic stream based on the received grant.

The first and second aspects may be modified as follows:

For example, the means may be further configured to perform or the method may further comprise:
determining the expected traffic amount on the amount of data which is expected to be sent in the downlink direction and/or based on an amount of grants which are expected to be assigned to user equipments connected to the at least one radio unit.

The means may be further configured to perform or the method may further comprise:
adding a relative priority specification to the network resource reservation request.

According to a third aspect of the present invention an apparatus is provided which comprises means for performing: receiving a network resource reservation request from a network element, which is connected to at least one radio unit via a fronthaul network, for at least one fronthaul traffic stream between the network element and at least one radio unit, committing a network resource reservation grant based on an amount of network resources available, and sending the network resource reservation grant to the network element.

According to a fourth aspect of the present invention a method is provided which comprises:
receiving a network resource reservation request from a network element, which is connected to at least one radio unit via a fronthaul network, for at least one fronthaul traffic stream between the network element and at least one radio unit,
committing a network resource reservation grant based on an amount of network resources available, and
sending the network resource reservation grant to the network elem ent.

The third and fourth aspects may be modified as follows:

For example, the means may be further configured to perform or the method may further comprise:
determining the amount of network resources available based information concerning the network resources obtained by configuration and/or by topology detection protocols.

The network resource reservation request may comprise a relative priority specification, and the means may be further configured to perform or the method may further comprise: committing the network resource reservation grant by taking into account the relative priority specification.

The means may be further configured to perform or the method may further comprise: prioritizing the network resource reservation requests in case the network resources are not sufficient to grant each network resource reservation request.

Moreover, the lifetime of a network resource reservation may be time limited.

The means of the apparatus according to the first or third aspects or their modifications may further comprise: at least one processor or circuitry, and at least one memory including computer program code, the at least one processor, with the at least one memory and the computer program code, being configured to cause the performance of the apparatus.

According to a fifth aspect of the present invention a computer program product is provided which comprises code means for performing a method according to the second aspect and/or the fourth aspect and/or their modifications when run on a processing means or module. The computer program product may be embodied on a computer-readable medium, and/or the computer program product may be directly loadable into the internal memory of the computer and/or transmittable via a network by means of at least one of upload, download and push procedures.

### Brief Description of the Drawings

These and other objects, features, details and advantages will become more fully apparent from the following detailed description of embodiments of the present invention which is to be taken in conjunction with the appended drawings, in which:
Fig. 1A shows a MAC scheduler of a BBU according to an embodiment of the present invention,
Fig. 1B shows a flowchart of a procedure carried out by the MAC scheduler according to an embodiment of the present invention,
Fig. 2A shows a network control entity according to an embodiment of the present invention,
Fig. 2B shows a flowchart of a procedure carried out by the network control entity according to an embodiment of the present invention, and
Fig. 3 shows a scenario including a fronthaul network between a BBU and several RUs, to which several UEs are connected via a radio connection according to an embodiment of the present invention.

### Detailed Description of embodiments

In the following, description will be made to embodiments of the present invention. It is to be understood, however, that the description is given by way of example only, and that the described embodiments are by no means to be understood as limiting the present invention thereto.

However, before describing the embodiments, the problem underlying the present application is described in some more detail.

As mentioned above, in fronthaul traffic between a BBU and a RU, using statistical multiplexing gains, i.e. oversubscribing a link, may cause congestion and correspondingly delayed or dropped packets. When using statistical multiplexing it may be the case that congestion occurs because there is more than average user traffic. Congestion of fronthaul traffic is critical as FH traffic must not be delayed much, because the traffic is quickly outdated. Equally, FH traffic should not be dropped. Acceptable delays are in the order of a few tens to hundreds of microseconds.

For regular IP traffic, several reactive schemes to handle congestion are used in the field. The most prominent one is TCP congestion control, where the packet rate of TCP packets is controlled by RTT and packet loss. Essentially a TCP connection adapts to the available bandwidth. This is complemented by active queue management (AQM) schemes, e.g. random early discard (RED), which starts discarding packets when queues in routers or switches are filling up. This in turn triggers TCP congestion control to reduce packet rate and in turn prevents that queues fill up completely. Two bits in the IP header are used for explicit congestion notification, which allows to carry information on congestion through a network without actually dropping packets.

In radio access networks HSDPA congestion control (CC) was developed. HSDPA CC measures delay build up between RNC and Nb and based on this information the BTS signals the RNC to send less data.

Such mechanisms are in use in the Internet as well as in radio access networks, but operate on a different time scale as needed for FH traffic. To prioritize among different traffic flows, DSCP marking is used, which allows to distinguish packets belonging to different service classes.

Other schemes of traffic engineering exist that allow to proactively reserve network resources for packet streams in the attempt to prevent any congestion within the network, e.g. schemes supported by protocols like RSVP-TE("Resource Reservation Protocol - Traffic Engineering", IETF RFCs 3209/5151).

For FH traffic, traffic of different PDU sessions of one or several UEs are carried in a single packet, therefore DSCP marking of the packets does not allow to distinguish higher and lower priority packets.

Embodiments of the present invention provide a solution for the BBU to prevent proactively congestion for FH traffic in both DL and UL direction.

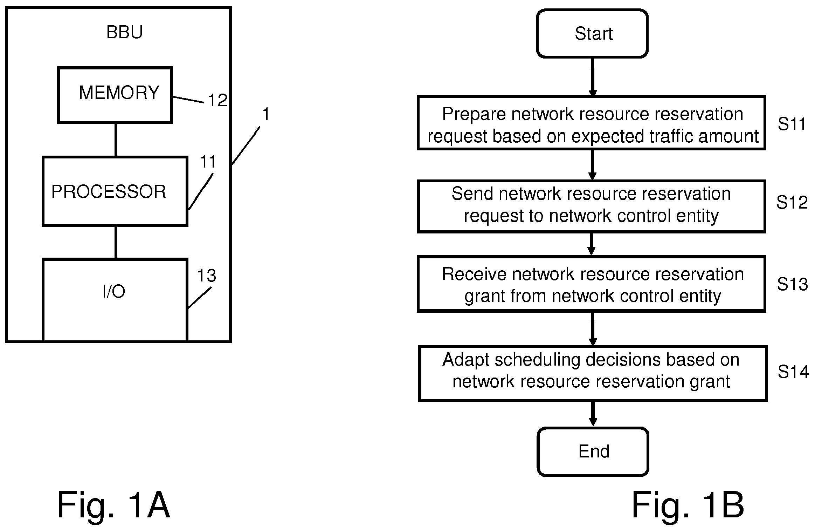

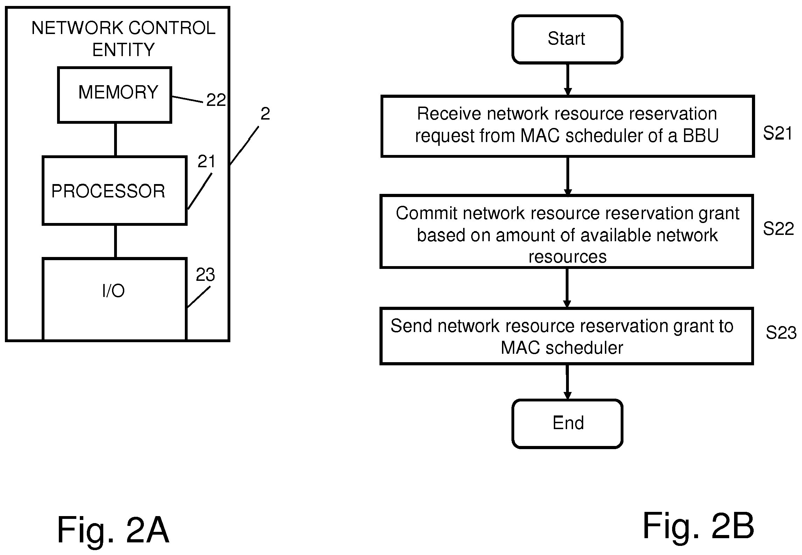

In the following, a general overview of an embodiment of the present invention is described by referring to Figs. 1A, 1B, 2A and 2B.

In particular, Fig. 1A shows a BBU 1 as an example for a first apparatus according to the present embodiment. However, the invention is not limited to a BBU, but the first apparatus can be a functional element inside a BBU carrying out a MAC scheduler function, for example. Thus, the apparatus can be any kind of network element which schedules fronthaul (FH) traffic between an endpoint (such as a DU, BBU etc.) of a fronthaul traffic connection or a fronthaul traffic stream via a fronthaul network and a radio unit (RU). The apparatus may also be a BBU including more than one MAC scheduler functions. Fig. 1B shows a procedure as carried out by the MAC scheduler.

The BBU 1 comprises at least one processor 11 and at least one memory 12 including computer program code. The at least one processor 11, with the at least one memory 12 and the computer program code, is configured to cause the apparatus to perform: controlling at least one fronthaul traffic stream via a fronthaul network to at least one radio unit, preparing a network resource reservation request for the at least one fronthaul traffic stream based on an expected traffic amount (as shown in step S11 of Fig. 1B), sending the network resource reservation request to a network control entity (as shown in step S12), receiving a network resource reservation grant from the network control entity based on the network resource reservation request (as shown in step S13), and adapting scheduling decisions for the at least one fronthaul traffic stream based on the received grant (as shown in step S14).

Fig. 2A shows a network control entity 2 as an example for a second apparatus according to the present embodiment. Fig. 2B shows a procedure as carried out by the network control entity 2. The network control entity 2 comprises at least one processor 21 and at least one memory 22 including computer program code. The at least one processor 21, with the at least one memory 22 and the computer program code, is configured to cause the apparatus to perform: receiving a network resource reservation request from a network element (e.g., a BBU 1 including the MAC scheduler shown in Fig. 1A), which is connected to at least one radio unit via a fronthaul network, for at least one fronthaul traffic stream between the network element and at least one radio unit (as shown in step S21 of Fig. 2B), committing a network resource reservation grant based on an amount of network resources available (as shown in step S22), and sending the network resource reservation grant to the network element (as shown in step S23).

Hence, according to some embodiments of the present invention, the first apparatus (e.g., BBU 1) which controls a fronthaul connection between one endpoint (e.g. BBU) to a radio unit, sends a network resource reservation request to the second apparatus (network control entity) based on an expected traffic amount. The second apparatus commits (grants) a network resource reservation grant based on the amount of network resources available, and the first apparatus adapts scheduling decisions based on the received network resource reservation grant.

In this way, it is possible to limit a traffic rate beforehand, so that congestion can be avoided or at least reduced.

It is noted that the MAC scheduler 1 (or the apparatus comprising the MAC scheduler such as the DU or BBU) and the network control entity 2 may further comprise input/output (I/O) units or functions (interfaces) 13, 23 connected to the processor 11, 21, in order to provide connections to other elem ents.

The at least one processor 11 and 21 described above may also be circuitry, wherein an example for the circuitry is FPGA.

In the following, some embodiments of the present invention are described in more detail.

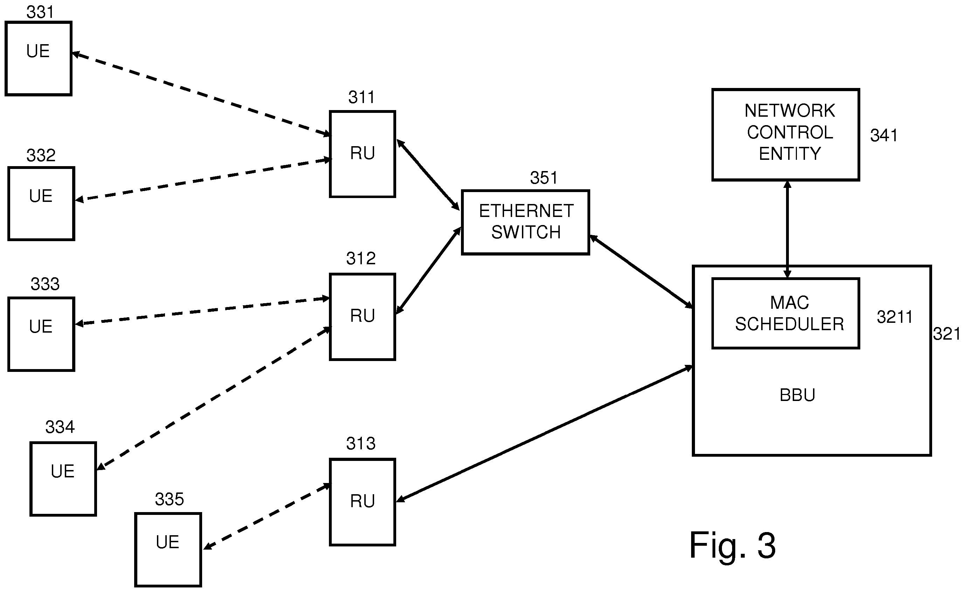

Fig. 3 shows an example for an overall architecture in connection with a fronthaul network, in which embodiments of the present invention may be applied. In particular, in this example, a BBU 321 is connected to a plurality of RUs 311 to 313 via a fronthaul network, and a plurality of UEs 331 to 335 is connected to the RUs 311 to 313 via radio connection. The radio connection is indicated by dashed arrows, whereas the connections (for example, fiber optic cables) between the BBU 321 and the RUs 311 to 313 are indicated by solid arrows. It is noted that the UEs cover also devices according to loT (Internet of Things).

Furthermore, the connection between the BBU 321 and the RUs 311 and 312 is provided via an Ethernet switch 351 as an example for a shared resource.

The BBU 321 comprises a MAC scheduler 3211 (as an example for the apparatus or BBU 1 shown in Fig. 1A) which is capable of communicating with a network control entity 341 (as an example for the apparatus or network control entity 2 shown in Fig. 2A).

In the example of Fig. 3, an example is shown in which only one BBU is present in the fronthaul network. However, in practice also a plurality of BBUs may be present. Moreover, each BBU may comprise more than one MAC scheduler.

According to some embodiments, the set of MAC schedulers (e.g. the MAC scheduler 3211 shown in Fig. 3) of each BBU (e.g. BBU 321) sharing a common fronthaul network are requesting network resource reservations for their various traffic streams through that network ahead of time, based on the amount of data they intend to send in downlink direction, and based on the amount of grants they intend to assign the UEs in uplink. These reservations can be as short-lived as a single or a small set of Transmission Time Intervals (TTI), or can exist as long as a few seconds, based on the optimization criteria of the solution. The network control entity 341 is committing network resource reservation grants as per the request, considering the amount of resources available. Every resource reservation request also contains a relative priority specification, so the network control entity can decide to delay or reject a subset of the requests of the amount of available resources is not sufficient. The relative priority specification may indicate different priorities given to different UEs connected to the RU, and/or prioritized traffic to certain UEs or the like, for example.

Based on the feedback from the network control entity the set of MAC schedulers is then adapting the scheduling decisions to match them to the network resources granted. Thus, the MAC schedulers control the amount of FH traffic in a timely manner according to the short-lived reserved resources.

Hence, according to some embodiments, a network control entity is introduced to the fronthaul network that has full knowledge of the networks resources, i.e. the topology, the capabilities of each node and also the capabilities of each link. The knowledge can be obtained e.g. by manual configuration or by topology detection protocols. This network control entity can be implemented by a single physical instance (as shown in the example of Fig. 3), but the implementation can also be distributed among all the MAC scheduler instances sharing the fronthaul network.

As part of MAC scheduling process, all MAC schedulers derive data about the future needs of network resource to transport the scheduled traffic between the BBUs and the RUs, in terms of average throughput, maximum burst size, maximum delay tolerance and tolerated loss ratio. Alternatively, also a more specific specification is possible, e.g. number and size of resource blocks to be transferred within which TTI and their tolerance to latency and loss.

This data is being translated into a number of network resource reservation requests, to be transferred to the network control entity which then processes each request by projecting the necessary paths through the network and accounting the necessary network resources for each path. Then the network control entity grants the requests, detailing the paths to be used for each grant. If the network resources are not sufficient to grant each request, the network control entity needs to prioritize the requests, and deny a subset so sufficient resources are available for the remaining requests.

In return, the MAC schedulers will process the grants received from the network control entity and, if necessary, adapt their previous scheduling decisions so the amount of data to be transported becomes equals to or smaller than the amount of data granted to be transported through the network.

The usual range of time MAC schedulers use for scheduling spans from the time of a single TTI to the time of the HARQ loop. For an LTE MAC scheduler that would be between 1 and 8 milliseconds. For most efficient network resource usage, this should also be the range of lifetimes of network resource grants.

However, to optimize the resource usage of the reservation process itself, another option would be to lengthen the lifetime of grants to at least a few seconds. According to such an embodiment, the MAC schedulers would need to derive their resource requests from their short-term average amount of scheduled traffic, and adapt their later scheduling decisions accordingly. In this way, temporary oversubscription of network resources can be avoided.

Thus, according to several embodiments of the present invention, a QOS aware network resource reservation for packetized fronthaul networks is achieved.

Embodiments of the present invention are not limited to the examples as given before.

For example, according to some embodiments, the network control entity is described as a separate entity. However, the network control entity may be included in one or more of the BBUs involved. For example, the function of the network control entity may be included in one or more of the MAC schedulers.

Names of network elements, protocols, and methods are based on current standards. In other versions or other technologies, the names of these network elements and/or protocols and/or methods may be different, as long as they provide a corresponding functionality.

In general, various embodiments of the UE can include, but are not limited to, mobile stations, cellular telephones, personal digital assistants (PDAs) having wireless communication capabilities, portable computers having wireless communication capabilities, image capture devices such as digital cameras having wireless communication capabilities, gaming devices having wireless communication capabilities, music storage and playback appliances having wireless communication capabilities, Internet appliances permitting wireless Internet access and browsing, as well as portable units or terminals that incorporate combinations of such functions.

The memories 12 and 22 may be of any type suitable to the local technical environment and may be implemented using any suitable data storage technology, such as semiconductor based memory devices, magnetic memory devices and systems, optical memory devices and systems, fixed memory and removable memory. The processors 11 and 21 may be of any type suitable to the local technical environment, and may include one or more of general-purpose computers, special purpose computers, microprocessors, digital signal processors (DSPs) and processors based on a multi core processor architecture, as non-limiting examples.

Further, as used in this application, the term "circuitry" refers to all of the following:
(a) hardware-only circuit implementations (such as implementations in only analog and/or digital circuitry) and
(b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a mobile phone or server, to perform various functions) and
(c) to circuits, such as a microprocessor(s) or a portion of a microprocessor(s), that require software or firmware for operation, even if the software or firmware is not physically present.

This definition of "circuitry" applies to all uses of this term in this application, including in any claims. As a further example, as used in this application, the term "circuitry" would also cover an implementation of merely a processor (or multiple processors) or portion of a processor and its (or their) accompanying software and/or firmware. The term "circuitry" would also cover, for example and if applicable to the particular claim element, a baseband integrated circuit or applications processor integrated circuit for a mobile phone or a similar integrated circuit in server, a cellular network device, or other network device.

It is to be understood that the above description is illustrative of the invention and is not to be construed as limiting the invention. Various modifications and applications may occur to those skilled in the art without departing from the true spirit and scope of the invention as defined by the appended claims.

## Claims

1. An apparatus comprising means for performing:
controlling at least one fronthaul traffic stream via a fronthaul network to at least one radio unit,
preparing a network resource reservation request for the at least one fronthaul traffic stream based on an expected traffic amount,
sending the network resource reservation request to a network control entity,
receiving a network resource reservation grant from the network control entity based on the network resource reservation request, and
adapting scheduling decisions for the at least one fronthaul traffic stream based on the received grant.

2. The apparatus according to claim 1, wherein the means is further configured to perform:
determining the expected traffic amount on the amount of data which is expected to be sent in the downlink direction and/or based on an amount of grants which are expected to be assigned to user equipments connected to the at least one radio unit.

3. The apparatus according to claim 1 or 2, wherein the means is further configured to perform:
adding a relative priority specification to the network resource reservation request.

4. An apparatus comprising means for performing:
receiving a network resource reservation request from a network element, which is connected to at least one radio unit via a fronthaul network, for at least one fronthaul traffic stream between the network element and at least one radio unit,
committing a network resource reservation grant based on an amount of network resources available, and
sending the network resource reservation grant to the network elem ent.

5. The apparatus according to claim 4, wherein the means is further configured to perform:
determining the amount of network resources available based information concerning the network resources obtained by configuration and/or by topology detection protocols.

6. The apparatus according to claim 4 or 5, wherein the network resource reservation request comprises a relative priority specification, and the means is further configured to perform:
committing the network resource reservation grant by taking into account the relative priority specification.

7. The apparatus according to any one of the claim 4 to 6, wherein the means is further configured to perform:
prioritizing the network resource reservation requests in case the network resources are not sufficient to grant each network resource reservation request.

8. The apparatus according to any one of the claim 4 to 7, wherein
the lifetime of a network resource reservation is time limited.

9. The apparatus according to any one of the claims 1 to 8, wherein the means comprises
at least one processor or circuitry, and
at least one memory including computer program code, the at least one processor or circuitry, with the at least one memory and the computer program code, being configured to cause the performance of the apparatus.

10. A method comprising:
controlling at least one fronthaul traffic stream via a fronthaul network to at least one radio unit,
preparing a network resource reservation request for the at least one fronthaul traffic stream based on an expected traffic amount,
sending the network resource reservation request to a network control entity,
receiving a network resource reservation grant from the network control entity based on the network resource reservation request, and
adapting scheduling decisions for the at least one fronthaul traffic stream based on the received grant.

11. The method according to claim 10, further comprising:
determining the expected traffic amount on the amount of data which is expected to be sent in the downlink direction and/or based on an amount of grants which are expected to be assigned to user equipments connected to the at least one radio unit.

12. The method according to claim 10 or 11, further comprising:
adding a relative priority specification to the network resource reservation request.

13. A method comprising:
receiving a network resource reservation request from a network element, which is connected to at least one radio unit via a fronthaul network, for at least one fronthaul traffic stream between the network element and at least one radio unit,
committing a network resource reservation grant based on an amount of network resources available, and
sending the network resource reservation grant to the network elem ent.

14. The method according to claim 13, wherein the network resource reservation request comprises a relative priority specification, and the method further comprises:
committing the network resource reservation grant by taking into account the relative priority specification.

15. The apparatus according to claim 13 or 14, further comprising:
prioritizing the network resource reservation requests in case the network resources are not sufficient to grant each network resource reservation request.
